Europäisches Patentamt

European Patent Office

Office européen des brevets

(11) Veröffentlichungsnummer: **0 096 245**
**B1**

## (12) EUROPÄISCHE PATENTSCHRIFT

(45) Veröffentlichungstag der Patentschrift:
05.02.86

(21) Anmeldenummer: 83104843.4

(22) Anmeldetag: 17.05.83

(51) Int. Cl.⁴: **F 27 B 15/10, B 01 J 8/38**

(54) Wirbelschichtofen.

(30) Priorität: 08.06.82 DE 3221567

(43) Veröffentlichungstag der Anmeldung:
21.12.83 Patentblatt 83/51

(45) Bekanntmachung des Hinweises auf die Patenterteilung:
05.02.86 Patentblatt 86/6

(84) Benannte Vertragsstaaten:
**BE DE FR GB IT NL**

(56) Entgegenhaltungen:
**DE - A - 2 750 003**
**FR - A - 2 344 801**
**GB - A - 2 003 396**
**US - A - 2 623 810**
**US - A - 4 115 929**

(73) Patentinhaber: **Bergwerksverband GmbH,**
**Franz-Fischer-Weg 61, D-4300 Essen 13 (DE)**

(72) Erfinder: **Schilling, Hans-Dieter, Dr., Pastoratsweg 43,**
**D-4320 Hattingen 16 (DE)**
Erfinder: **Holl, Lothar, Hubertstrasse 282,**
**D-4300 Essen 13 (DE)**

LIBER, STOCKHOLM 1986

## Beschreibung

Die Erfindung betrifft einen Wirbelschichtofen mit den Merkmalen gemäß dem Oberbegriff von Anspruch 1 sowie ein Verfahren zum Betreiben eines solchen Wirbelschichtofens.

Wirbelschichtöfen dienen in verschiedensten Anwendungsbereichen der Behandlung von Schüttgütern. Sie werden so betrieben, daß das Schüttgut durch Wirbelgas aufgelockert und in einem gewissen Schwebezustand gehalten wird.

Aus der EP-A-042 095 ist ein Wirbelschichtofen der eingangs genannten Art bekannt, bei dem eine gute Durchmischung der von oben frisch eingespei ster Schüttgutpartikel und deren Vordringen bis annähernd auf das Niveau des Anströmbodens dadurch erreicht wird, daß der Anströmboden im Bereich unterhalb der Einspeise stellen eine verminderte oder völlig fehlende Gasdurchlässigkeit aufweist. Die in solchen beruhigten Zonen" sich einstellende Abwärtsbewegung der Schüttgutpartikel wird durch diese (beruhigten Zonen) begrenzende, jalousieartige Wandeinbauten unterstützt. Fernerhin können Bodeneinbauten mit abgeböschten Seitenwänden in den beruhigten Zonen des Anströmbodens vorgesehen sein, um das seitliche Austreten der Schüttgutpartikel aus den beruhigten zonen in die Wirbelzonen zu unterstützten. Es hat sich herausgestellt, daß das Abfließen der sich in den beruhigten Zonen absenkenden Schüttgutpartikel in die Wirbelzonen in manchen Anwendungsfällen nicht sicher einstellt.

Es ist daher die Aufgabe der Erfindung, bei einem Wirbelschichtofen der eingangs genannten Art die Zirkulation der Schüttgutpartikel, insbesondere deren Abfließen in benachbarte Wirbelzonen, zu verbessern. Dies wird erreicht durch vorzugsweise paarweise, mit Abstand voneinander im Wirbelschichtofen sich erstreckende, von Wirbelgut unter-und durchströbare vertikale Wandeinbauten sowie Gasejektoren im unteren Teil der Wandeinbauten. Der Vorteil dieser Kombination besteht darin, daß sich bevorzugt innerhalb der Wandpaare absenkende Schüttgutpartikel durch die Anwendung des Ejektorgases in der Nähe der Wandeinbauten, insbesondere in der Nähe des Anströmbodens, derart aufgelockert werden, daß sie in die seitlichen Wirbelzonen abfließen. Es entsteht also an der einen Seite der Wandeinbauten eine Abwärtsbewegung und an der gegenüberliegenden Seite eine Aufwärtsbewegung der Schüttgutpartikel, während Schüttgu: partikel durch Über-oder seitliches Einströmen die Wandeinbauten überwinden bzw. c.iese vermittels des Ejektorgases unterwandern. Deünach kann es sich bei den Wandein bauten z. B. um gemauerte Wände handeln, mit Durchbrüchen oder Öffnungen zwischen dem Anströmbodens und der Oberflä che der wirbelnden Schicht, aber auch um solche Wandeinbauten mit weiteren Öffnungen.

Durch einen Anströmboden mit verminderter Gasdurchlässigkeit innerhalb von Wandpaaren mit abwärts gerichteter Schüttgutbewegung wird das Wirbeln der Schüttgutpartikel innerhalb der Wandpaare vermindert oder ganz unterdrückt und dadurch die Abwärtsbewegung unterstützt. Eine einfache Möglichkeit, die Gasdurchlässigkeit des Anströmbodens zu vermindern, besteht in der Verwendung der bereits erwähnten Bodeneinbauten mit abgeböschten Seitenwänden. Durch eine entsprechende Steilheit der Seitenwände dieser Einbauten tritt ein gewünschtes seitliches Abfließen der Schüttgutpartikel in normal wirbelnde Zonen ein.

Ejektordüsen mit einer Ausrichtung auf die normal wirbelnden Zonen unterstützen den seitlichen Partikelaustrag aus. Partikelsenken ;dabei können sich die Ejektordüsen an den Wandeinbauten selbst befinden; besonders einfach und wir kungsvoll sind aber etwa in Form von Bohrungen in den Seitenwänden der erwähnten Bodeneinbauten vorgesehene Ejektordüsen. Diese vermeiden besonders wirkungsvoll ein Ab setzen der Feststoffpartikel oberhalb der Bodeneinbauten und erhöhen in Verbindung mit der Abböschung der Seitenwände das Abfließen der Schüttgutpartikel.

Durch jalousieförmige Wandeinbauten, wie sie z. B. weiter oben erwähnt wurden, wird der Gas- und Feststoffaustausch zwischen den beiden Seiten der einzelnen Wandeinbauten gefördert; insbesondere fördern nach innen zwischen die Wandeinbauten geneigte, etwa horizontal erstreckte Jalou sieleisten den Partikeleintrag in die Absenkungszonen.

Bei einem bevorzugten Verfahren zum Betreiben eines Wirbelschichtofens der vorbeschriebenen Art werden Ejektorgasmengen derart gesteuert in den Wirbelschichtofen eingespeist, daß die sich dementsprechend einstellende Schütt gutzirkulation den jeweiligen Prozeßanforderungen gerecht wird. Der Vorteil dieser Maßnahme besteht darin, daß mit einer Steigerung oder Senkung der Ejektorgasmenge der Auf lockerungszustand der Schüttgutpartikel und deren Abfließen aus der Absenkungszone in weitem Umfang variiert und auch intermitierend betrieben werden kann.

Weitere Vorteile und Ausgestaltungen der Erfindung ergeben sich aus der Beschreibung eines in der beiliegenden Zeichnung dargestellten Ausführungsbeispieles. In der Zeichnung zeigen.:

Fig. 1 einen Wirbelschichtofce im Vertikalschnitt,

Fig. 2 die vergrößerte Darstellung eines Ausschnittes eines Wirbelschichtofens im Vertikalschnitt.

Ein Wirbelschichtofen hat geschlossene Seitenwände 1 und einen gasdurchlassige Anströmboden 2 als Decke eines Windkastens 3, in den Wirbelgas durch einen Gasanschlußstutzen 4 eingespeist wird. Oberhalb des Anströmbodens 2 erstrecken sich mit Abstand voneinander angeordnete, gasdurchlässige Wandeinbauten 5. Im unteren Teil der Wandeinbauten sind an diesen bzw. am Anströmboden 2 Gasejektoren 6 vorgesehen, aus welchen in durch Pfeile in der Zeichnung dargestellte, vorgebbare Richtungen Ejektorgas ausströmt. Dadurch entstehen Dichtunterschiede in benachbarten Schüttgutbereichen, was ein Auflockern im Bereich größerer Dichten durch Partikelabfluß hervorruft.

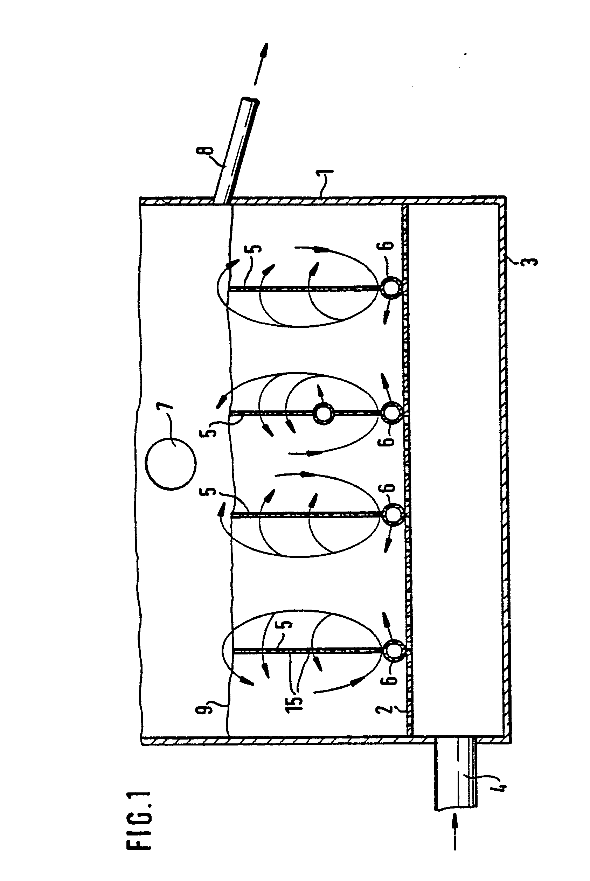

Die Wandeinbauten 5 sind bevorzugt paarweise, wie in der Bildmitte der Fig. 1, vorgesehen, aber auch in der Nähe der Seitenwände 1 des Wirbelschichtofens, und die Ejekto ren 6 sind so angeordnet, daß sie einen Schüttgutabfluß nach außerhalb der Wandpaare hervorrufen. Dadurch entstehen zwischen paarweise angeordneten Wandeinbauten oder Wandeinbauten und naheliegenden Seitenwänden des Wirbelschichtofens abwärts gerichtete Partikelströmungen und entsprechend aufwärts gerichtete Partikelströmungen zwischen verschiedenen Wandpaaren, wie dies durch Strömungs pfeile in Fig. 1 dargestellt ist; im oberen Teil der Wandeinbauten werden diese von Schüttgutpartikeln durch und/ oder überströmt, so daß die Zirkulation automatisch in Gang bleibt, was dadurch unterstützt wird, daß sich Schüttgutpartikel in einem Wirbelschichtofen durch die Fluidisierung ähnlich wie eine Flüssigkeit verhalten.

Ein Schüttguteinspeiser 7 oberhalb der Zonen mit abwärts gerichteter Partikelströmung gewährleistet das Absinken der frisch eingespeisten Partikel bis etwa auf das Niveau des Anströmbodens und unterstützen damit die gute Vermi schung solcher Partikel. Bei diesen Partikeln kann es sich auch um Zyklonstaub handeln, der bei der Trennung von Wirbelgut und Wirbelgas entsteht. Ein Schüttgutüberlauf 8 stellt die Entsorgung des Wirbelschichtofens von Schütt gut sicher.

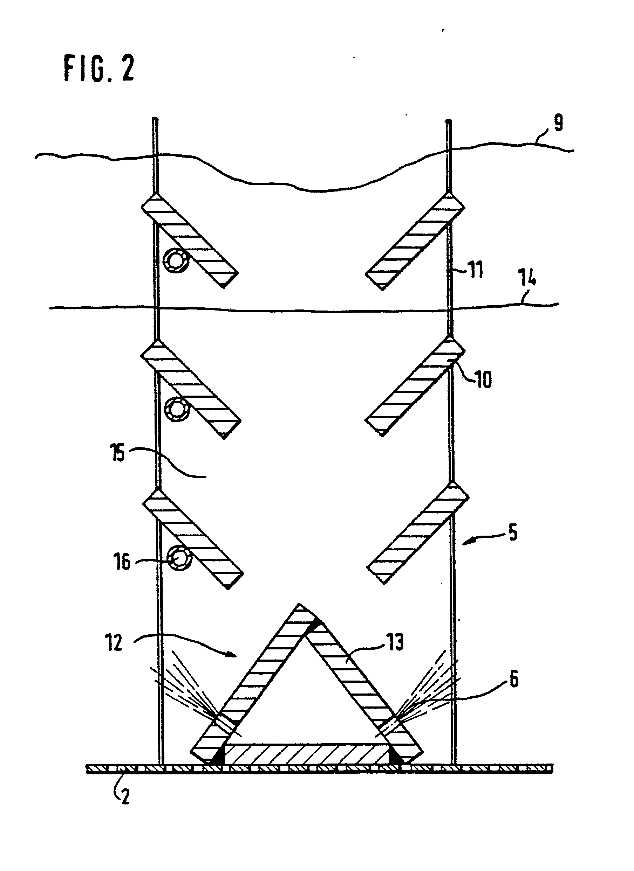

In Fig. 2 erkennt man, daß die obere Begrenzung der Wirbelschicht 9 oberhalb der Zonen der Schüttgutabsenkung leicht muldenförmig ist. Wandeinbauten bestehen aus Jalou sielamellen 10, die durch Streben 11 in Position gehalten werden. Zwischen einem Paar von Wandeinbauten mit nach innen abgeschrägten Jalousielamellen ist ein Bodeneinbauteil 12 in Prismenform auf dem Anströmboden 2 angeordnet; dieses weist in den abgeböschten Seitenwänden Gasejektoren 6 auf, die in Richtung der Zonen mit aufwärts gerichteter Partikelströmung (siehe Strömungspfeile) ausgerichtet sind. Solche Bodeneinbauteile können auch prismenförmig aufeinandergeschichtete oder angeordnete Rohre sein, durch die vorzugsweise Ejektor-und/oder Wirbelgas strömen und ggf. durch seitliche Durchlässe ausströmen kann. Die Ruhegrenze der nicht angeströmten Schüttgutpartikelschüttung ist mit 14 dargestellt. Je nach Größe und Anzahl der Gas ejektoren sowie der durch sie austretenden, steuerbaren Menge an Ejektorgas wird die Schüttgutzirkulation in ihrer Stärke variiert. Besondere Abmessungen ergeben sich jeweils aus dem Anwendungsfall und lassen sich ohne weiteres ermitteln.

Öffnungen 15 für Gas-oder Partikelaustausch können in Form von Löchern, Schlitzen und ähnlichen Durchbrechungen der Wandeinbauten bestehen.

Von einem Wärmeträgerfluid durchströmte Kanäle 16 an den Wandeinbauten 5 können deren Kühlung oder Erwärmung sicherstellen.

## Patentansprüche

1. Wirbelschichtofen mit geschlossenen Seitenwänden (1) und einem Anströmboden (2) mit Zonen verminderter Gasdurchlässigkeit innerhalb von Wandpaaren mit oder ohne darauf angeordneten Bodeneinbauten mit abgeböschten Seitenwänden sowie mit Windkasten (3) für Wirbelgas, gekennzeichnet durch mit Abstand voneinander in ihm sich erstreckende, von Wirbelgut über-und durchströmbare Wandeinbauten (5) sowie Gasejektoren (6) im unte ren Teil der Wandeinbauten.

2. Wirbelschichtofen nach Anspruch 1, gekennzeichnet durch Bodeneinbauten (12) mit abgeböschten Seitenwänden (13) innerhalb von Wandpaaren (5, 5) bzw. (5, 1).

3. Wirbelschichtofen mit geschlossenen Seitenwjänden (1) und einem Anströmboden (2) mit Zonen verminderter Gasdurchlässigkeit innerhalb von Wandpaaren mit darauf angeordneten Bodeneinbauten mit abgeböschten Seitenwänden sowie mit Windkasten (3) für Wirbelgas, gekennzeichnet durch mit Abstand voneinander in ihm sich erstreckende,von Wirbelgut über und durchströmbare Wandeinbauten (5) sowie Gasejektoren (6) in den abgeböschten Seitenwänden (13) der Bodeneinbauten (12) innerhalb der Wandpaare (5,5;5,1).

4. Wirbelschichtofen nach einem oder mehreren der Ansprüche 1 bis 3, gekennzeichnet durch jalousieförmige Wandeinbauten (10, 11).

5. Verfahren zum Betreiben eines Wirbelschichtofens nach Anspruch 1 und/oder 3, dadurch gekennzeichnet, daß Ejektorgas in steuerbaren Mengen in den Wirbelschichtofen eingespeist wird.

## Revendications

1. Four à lit fluidisé avec des parois laterales (1) fermées et une plaque de fond (2) avec des zones à permé abilité aux gaz réduite, disposées entre des paires de cloisons portant ou ne portant pas des chicanes à surfaces inclinees, ainsi qu'avec une boîte à vent (6) pour le gaz de fluidification, caractérise en ce qu'il comprend des cloisons (5) intérieures, disposees à distance les unes des autres, sur et à travers lesquelles la matière fluidifiée peut s'ecouler, ainsi que des ejecteurs de gaz (6) dans la partie inférieure des cloisons.

2. Four à lit fluidisé suivant la revendication 1, caractérisé en ce qu'il comprend des chicanes (12) à surfaces latérales (13) inclinées, disposées entre des paires de cloisons (5,5) et(ou) entre cloison et paroi latérale (5,1).

3. Four à lit fluidise avec des parois latérales fermées et une plaque de fond (2) avec des zones de per méabilité aux gaz réduite, disposées entre des paires de cloisons, portant des chicanes à surfaces latérales inclinées, ainsi qu,avec une boîte à vent (3) pour le gaz de fluidification, caractérisé en ce qu'il comprend des cloisons (5), sur et à travers lesquelles la matière fluidifiée peut s'écouler, ainsi que des éjecteurs de gaz (6) dans les parois latérales (13) inclinées des chicanes (12) disposées entre les paires de cloisons (5,5) et(ou) entre cloison et paroi latérale (5,1).

4. Four à lit fluidisé suivant une ou plusieurs des revendications 1 à 3, caractérisé en ce qu'il comprend des chicanes (10, 11) disposées à la manière d'une jalousie sur les cloisons (5).

5. Procéde pour l'exploitation d'un four à litfluidisé suivant la revendication 1 et(ou) la revendication 3, caractérisé en ce que le four à lit fluidisé est alimenté par les éjecteurs avec des volumes réglables de gaz.

## Claims

1. A fluidized-bed furnace with closed lateral walls (1) and an inflow floor (2) with zones of reduced gas-permeability inside pairs of walls with or without floor structures mounted thereon with sloping lateral walls and with blast boxes (3) for fluidizing gas, characterized by wall structures (5) which extend at a distance from one another therein and over and through which fluidized material can flow, and gas ejectors (6) in the lower Part of the wall structures.

2. A fluidized-bed furnace according to claim 1, characterized by floor structures (I2) witb sloping lateral walls (I3) inside pairs of walls (5, 5) or (5, 1).

3. A fluidized-bed furnace with closed lateral walls (1) and an inflow floor (2) with zones of reduced gas-permeability inside pairs of walls with floor structures mounted thereom with sloping lateral walls and with blast boxes (3) for fluidizing gas, characterized by wall structures (5) which extend at a distance from one another therein and over and through which fluidized material can flow, and gas ejectors (6) in the sloping lateral walls (13) of the floor structures (12) inside the Pairs of walls (5, 5; 5, 11).

4. A fluidized-bed furnace according to one or more of claims 1 to 3, characterized by wall structures (10, 11) in the form of shutters.

5. A method of operating a fluidized-bed furnace according to claim 1 and/or 3, characterized in that ejector gas is fed into the fluidized-bed furnace in controllable quantities.

FIG.1

FIG. 2